# EUROPEAN PATENT APPLICATION

(11) **EP 4 527 185 A1**
(43) Date of publication of application: **26.03.2025**
(21) Application number: 24200752.4
(22) Date of filing: 17.09.2024
(51) Int. Cl.: A01D 78/04, A01D 78/14, A01F 15/10

(54) **FOLDING SYSTEM FOR SWATHING RAKE ATTACHED TO A BALER**

(30) Priority: 21.09.2023 ES 202330789
(71) Applicant: Stirmot, S.L., 47800 Medina de Rioseco Valladolid (ES)
(72) Inventor: ARCE GARCIA, Diego, 47800 Medina de Rioseco (Valladolid) (ES)
(74) Representative: Ungria López, Javier

(57) **Abstract**

The present invention relates to a folding and unfolding system for swathing rakes (1), attachable to a baler (2), wherein said system comprises a support structure (4) connected, by means of a hinged articulated joint (5), to at least one lifting arm (7) connected to a swathing rake (1); wherein the folding and unfolding system for swathing rakes (1) is configured to be towed in a longitudinal direction, when pushed by the displacement means (3), and wherein the hinged articulated joint (5) comprises an axis of rotation which, when the folding and unfolding system is in the displacement position, is comprised in an intersection of an inclined plane, with respect to the flat ground on which the folding and unfolding system rests, an angle comprised between 8° and 30°, and a plane perpendicular to said ground.

## Description

### Object of the invention

The present invention consists of a system for folding and unfolding a swathing rake, attachable to a baler, of the type comprising raking combs, with a special configuration by means of which it is possible to optimise the mechanisms comprised in the folding and unfolding system, achieving a reduction in height in its retracted, transport position, thereby allowing the swather to be equipped with larger working rotors and, in turn, avoiding accumulations of stress at the articulation points of the folding systems.

The invention falls within the field of agricultural machinery, and more specifically in the sector of forage harvesting and raking machinery.

### Technical problem to be resolved and background of the invention

The swathing rake is an agricultural machine that groups forage into rows or strings to facilitate the task of harvesting forage.

Its action is based on the movement of metal elements known as spikes or fingers, capable of continuously sweeping the forage, in such a way that, through the longitudinal displacement of the swathing rake over the ground to be raked, the movement of the spikes or fingers on said ground displaces and accumulates the forage in rows or strings comprising the direction followed by the swathing rake.

Depending on the characteristics of the supports that secure the spikes or fingers, several types of rakes are established.

Some of the most common in the sector are the horizontal and oblique rotor swathers or those with parallel bars. The main characteristic of these swathers is that they perform gentle raking, without damaging the plant, preserving all its properties. In addition, cleaner forage is obtained, without stones or impurities.

Its operation is based on fingers or spikes that perform the raking. These are mounted on several straight bars joined at their ends to discs or rotors on each side. Said fingers rotate around a horizontal axis, for which reason they are often called parallel bar rakes or horizontal rotor rakes.

The rotation of the rotor will generate the rotational displacement of the bars with respect to the horizontal axis, in turn generating the desired sweeping of the forage. As a bar approaches the ground the hooks touch the hay and push it sideways. The next bar will continue the work, thus generating a continuous displacement of the hay or item to be swept, in a lateral direction, as the rake is longitudinally displaced across the ground, until creating an accumulation of the swept hay in the form of rows or strings.

The rotation of the rotor together with the advance of the tractor causes the spikes to continuously propel the forage laterally, creating a constant flow of forage in the form of a "wave", also called a tangle. As the tractor advances, the tangle is deposited along a line or row, which makes the subsequent collection of the forage easier.

For the correct operation of the swathing rake, it (that is, the complete structure comprising the swathing rake, mainly from the parallel bars that make it up) must be in a parallel position with respect to the ground on which it moves longitudinally, that is, in a horizontal, or substantially horizontal, orientation with respect to the ground on which it rests, in order to be able to move all the material found in a regular manner.

Depending on the location where the row of raked material is to be created, the swathing rake, being in a horizontal position, may be inclined, with respect to the longitudinal direction of travel of the tractor vehicle, at an angle of less than or greater than 90°. For example, if it is desired to accumulate all the material raked by a swathing rake in outer rows, away from the path of the tractor vehicle, said rake can be oriented at an angle greater than 90°, to favour the movement of the spikes or fingers in an outgoing raking direction. Likewise, if it is desired to accumulate the raked material in a row that follows the same path as the tractor vehicle, so that said material can be collected by a baler, also pushed by the tractor vehicle, the swathing rake may be inclined at an angle less than 90° with respect to the longitudinal direction. That is to say, it is not necessary for the swathing rake to comprise a completely perpendicular orientation to the longitudinal direction of travel of the tractor vehicle.

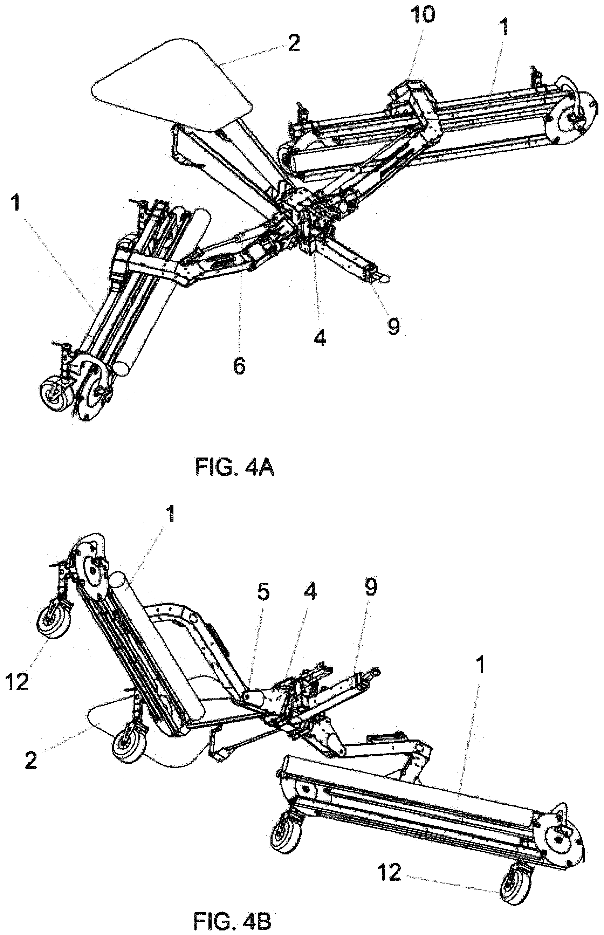

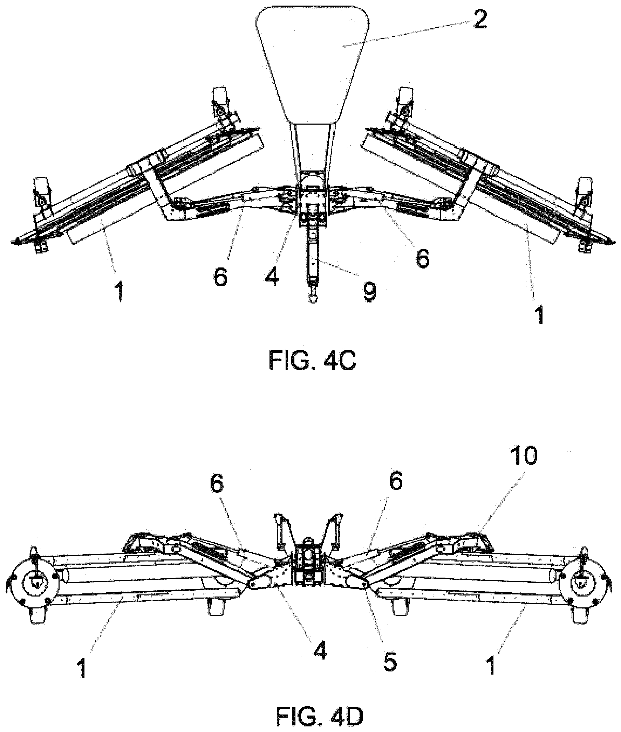

In fact, when a system comprises two swathing rakes (one on each side, these being elongated in shape defined by the bars they comprise), each of them connected to each side of a baler, and able to be attached to a tractor vehicle, these rakes are usually oriented in a "V" shape, when viewed from a plan perspective (as shown in figure 4C). That is to say, to facilitate the correct raking of the material and place it in rows, the arrangement of said two rakes is similar to that generated by a funnel effect, said rakes being able to have an angle in plan, with respect to the longitudinal direction of movement of the tractor vehicle, slightly less than 90°, favouring said funnel effect, but without comprising a very small angle, in order to be able to cover the greatest amount of land possible with each pass.

One of the major problems with this type of machine arises when it is desired to fold or retract said swathing rake from its horizontal or use position (the bars being parallel to the ground) to a folded retracted position (which may be perpendicular, the bars being perpendicular or substantially perpendicular to the ground, the rakes being in an elevation or frontal perspective view), which allows the tractor vehicle propelling the same, as well as the baler, to be displaced along the available roads or lanes, without moving the swathing rake in a horizontal position that may occupy a greater width than the space available for its movement.

To carry out said folding, existing machines comprise a folding system which in turn comprises at least one lifting arm that has articulated joints at its ends, said arm being operable from a linear actuator, such as a pneumatic or hydraulic cylinder.

This folding system is normally defined by the lifting arm (or support chassis) of the swathing rake (or swathing basket) and by a pivot pin (hinge or set of hinges) of said arm, which is in an orientation parallel to the ground on which it rests, without any degree of inclination with respect to said ground or terrain. This system involves a very straight folding (90°) of the entire swathing basket, exceeding in many cases, depending on the length of the rakes, the maximum height of 4 metres, usually exceeded by an 8 metre swather, attachable to a baler.

In other words, the height between the swathing rakes (or swathing baskets) and the horizontal defined by the ground on which it rests, when said rake is in a folded state, is defined by the orientation of said rakes during use (which may be inclined in a "V" shape) with respect to the longitudinal direction of the tractor vehicle during use, as well as the degrees of rotation applied during folding (normally 90°) and by the shape of the lifting arm. Therefore, in said systems, the cross-section span of the rakes is directly converted into height when folded.

To solve the problem of said systems, where the swathing rakes comprise a great height when folded, systems have been developed which comprise telescopic configurations of the swathing rake, so that they can be extended when in the unfolded position and retracted when folded. In this way, even with very long swathing rakes, the length can be reduced by retracting. However, these systems generate many problems of wear and tear and breakages in the mechanical components that comprise the same, implying loss of effective working time by having more actuators for the movements of the telescopic arms, as well as a raking of lower quality than with non-extendable rakes.

Folding systems have also been developed comprising a double joint, so that, once the rakes have been folded 90° from the horizontal position to the perpendicular position (viewed from a frontal or elevation point of view of the system), a second folding or rotation of said rakes occurs, to reduce the inclination thereof and, therefore, their height (perceptible from a lateral point of view).

These systems increase the number of mechanical components in the system, as well as the concentration of stress to which it is subjected, which can lead to failures and a shorter useful life.

### Description of the invention

In order to solve the aforementioned problems, the present invention proposes applying degrees of inclination in the hinged connection of the lifting arm with the support structure (which allows the connection between the tractor vehicle and the baler) with respect to a horizontal defined by a flat ground on which said tractor vehicle and baler rest, so that swathing rakes can be folded, which can have lengths as high as up to 11 metres, without exceeding a certain height, above the ground on which they rest, of 4 metres, to facilitate their transport and storage and, in this way, comprise an standardised embodiment of a swather and baler machine assembly.

In other words, the invention being disclosed consists of a folding and unfolding system for swathing rakes attachable to a baler, wherein said system comprises:
- a support structure configured to be connected to a baler and to a displacement means, preferably a tractor vehicle;
- at least one lifting arm comprising a first end connected to a swathing rake and a second end connected, by means of a hinged articulated joint, to the support structure;

- the swathing rake;
- the hinged articulated joint
- a rotation mechanism configured to, when activated, fold and unfold the swathing rake between an extreme unfolded position and an extreme folded position, rotating the lifting arm, with respect to the support structure, through the hinged articulated joint;

wherein the folding and unfolding system for swathing rakes is configured to be towed in a longitudinal direction, comprised in a flat ground, when pushed by the displacement means, in said longitudinal direction, with:
   - the folding and unfolding system being oriented in a displacement position; and
   - the swathing rake being in any position comprised between the extreme folded position and the extreme unfolded position;
wherein the displacement position of the folding and unfolding system is that in which, the swathing rake being in the extreme unfolded position, it is in the position for raking the ground over which it moves;
wherein the hinged articulated joint comprises an axis of rotation which, when the folding and unfolding system is in the displacement position, is comprised in an intersection of an inclined plane, with respect to the flat ground on which the folding and unfolding system rests, an angle comprised between 8° and 30°, and in a plane perpendicular to said ground.

In other words, the invention is explained from the displacement position of the folding and unfolding system for swathing rakes, which is the position in which said system has been configured so that it can be easily towed by a displacement means, such as a tractor. In this way, the system being in said displacement position and the swathing rake being in the unfolded position, the latter is in the use position, parallel to the ground (supported on the same, in the case of having support and displacement means such as wheels) ready to rake the material found when the system is displaced in a longitudinal direction.

By means of the described embodiment, a system is achieved which allows the use of a swathing rake such as those described in the background but which, in the event that it is necessary to move said rake along narrow roads, not equipped for moving large agricultural material, or to store it in warehouses, said rake can be folded in a space comprised between the displacement means and the baler, in an orientation facing the ground on which it rests, which does not cover a transversal extension as high as that which is occupied when the rake is in the use position, but at the same time, which does not cover a height as high as that which would be occupied if said rake had been folded with respect to an axis located parallel to the ground on which the folding and unfolding system rests.

Thus, in this preferred embodiment, under ideal use conditions, the swathing rake is placed in a horizontal position, parallel to the ground to be raked (use position) and in turn, it can be perpendicularly (i.e. 90°) folded without the horizontal extension of the rake being transferred to the vertical extension, only by arranging the axis of rotation of the hinged articulated joint with an inclination with respect to the horizontal.

In a preferred embodiment, the rotation mechanism comprises a linear actuator comprising a first end connected to the support structure and a second end partially connected to the at least one lifting arm.

In a more specific embodiment, the linear actuator comprises a mechanism selected from a pneumatic cylinder, a hydraulic cylinder and a mechanical cylinder.

In one embodiment, the hinged articulated joint comprises a pivot bolt. In other words, said pivot bolt acts as a hinge for the lifting arm with respect to the support structure.

In a preferred embodiment, the support structure is configured to be connected to a baler by means of a rigid connection, preferably a removable connection. Said rigid connection may comprise a coupling tow bar comprised in the support structure and a plurality of screws or bolts screwed to nuts. In fact, the folding and unfolding system can always remain connected to the baler since both machines have a directly related use.

Preferably, the folding and unfolding system for swathing rakes is always connected to a baler, when in use, so that said baler can bale the raked material into compact blocks. However, the system may not be connected to the baler, and perform the swathing of the raked material and the baling in different stages or passes.

One of the reasons why the folding and unfolding system for swathing rakes should always be connected to a baler is because, when the system is folded, said swathing rakes can be supported on the ground through the baler, without the need for additional displacement elements (such as wheels) on the system itself.

In one embodiment, the support structure is configured to be connected to the displacement means by means of a swivel articulated joint. Said connection is common in trailers that are connected to tractor vehicles, since they allow for an articulation that enables easy handling of the convoy, avoiding stress concentrations in the joints.

In one embodiment, the system comprises a hitch tow bar comprising the swivel articulated joint configured to be connected to the displacement means, wherein said hitch tow bar is connected to the support structure by means of an articulated joint comprising at least one suspension and levelling cylinder.

As is normal, when connecting the folding and unfolding system, such as in the case of trailers with a displacement means, stress accumulations occur, which a damper can reduce, preventing said accumulations from causing damage to the structures of said elements. Similarly, the system is prevented from swinging when it is being displaced.

In one embodiment, the lifting arm is connected to the swathing rake by means of a swinging system configured to adjust the swathing rake to the ground when the folding and unfolding system is in the displacement position and said swathing rake is in the extreme unfolded use position.

This swinging system means that the lifting arm and the swathing rake are not joined by means of a rigid connection, but rather one that can be slightly articulated, at least a few degrees, so that, when the swathing rake is in the use position (such as horizontally), in the event of encountering irregularities in the raked ground that force it to tilt or incline slightly, the stress accumulations are not transferred to the lifting arm, and therefore to the folding system. In other words, the swathing rake can adapt its inclination to the uneven inclination of the terrain, without affecting the rest of the folding and unfolding system, thanks to the degree of freedom of the joint between the lifting arm and the swathing rake.

In one embodiment, the angle of the inclined plane that defines the orientation of the axis of rotation of the hinged articulated joint is comprised between 10° and 25°, since these are the appropriate inclinations so that the swathing rakes having more typical dimensions can be folded without reaching an excessive height that prevents their correct displacement.

In a more specific embodiment, the swathing rake comprises an extension of between 8 and 11 metres in length; wherein the angle of the inclined plane that defines the orientation of the axis of rotation, of the hinged articulated joint, is directly dependent on the length extension of the swathing rake; wherein an 8 metre long swathing rake comprises a 10° angle; and wherein an 11 metre long swathing rake comprises a 25° angle.

In this way, the relationship between the extension of the swathing rake and the angle of inclination of the hinged joint articulation axis can be defined based on the given values.

The swathing rakes have an elongated shape, so that, if they were placed perpendicular to the ground on which the folding and unfolding system rests, they could reach a height identical to their span, which poses a serious problem for transporting and storing the same. However, since these rakes are arranged with an inclination, seen from a plan view, with respect to the longitudinal displacement direction, and since the axis of the hinged joint is inclined with respect to the ground on which it rests, the rake is articulated occupying a reduced height compared to its span.

In one embodiment, the swathing rake is configured to rotate an angle between 70° and 120°, preferably between 80° and 110°, and more preferably 90° from the extreme unfolded position to the extreme folded position.

Since there is the possibility of having to rake a ground that is at a different inclination to that which the displacement means is travelling, for example, a ground that is on an inclined slope next to a lane adapted for the passage of vehicles, which is in a horizontal position, it is appropriate to have a configuration that allows the system to adjust the inclination of the swathing rake to the surface to be raked. However, the most common use of this type of system occurs when both the transport means and the swathing rake are supported on the same flat ground, so a 90° articulation may be sufficient.

In one embodiment, the folding and unfolding system comprises two lifting arms, each of which is connected at a first end to a corresponding swathing rake and at a second end, by means of a corresponding hinged articulated joint, to the support structure. With two swathing rakes, an embodiment can be understood in which both comprise a "V" shape, such as that which is described in the background. They can be folded and unfolded individually or together, and the components that make them up do not collide during folding or unfolding, as each of them is located on either side of the support structure.

In one embodiment, the folding and unfolding system comprises support and displacement means connected to the swathing rake and are configured to support said swathing rake on the ground when it is in the unfolded state. Said support means preferably comprise one or more wheels that can be displaced along the ground to be raked, connected to the rake by means of a free vertical axis.

### Description of the figures

To complete the description, and for the purpose of helping to make the features of the invention more readily understandable, this specification is accompanied by a set of drawings constituting an integral part of the same, wherein by way of illustration and not limitation the following has been represented:
- Figure 1 shows a side view of a tractor-shaped transport means, towing: the folding and unfolding system for swathing rakes, the latter being in the displacement position, one of said rakes being visible in the folded position with the axis of the hinged joint inclined with respect to the ground on which they rest; as well as a baler, in a position after the folding system.
- Figure 2A shows a detail side view of the folding and unfolding system for swathing rakes, the only swathing rake it comprises being in the folded position, with the inclination of the axis of the hinged joint being visible.
- Figure 2B shows a front view of the folding and unfolding system shown in figure 2A.
- Figure 2C shows a plan view of the system shown in figures 2A and 2B.
- Figures 2D and 2E show two lower perspective views of the system shown in figures 2A to 2C, where the components and preferred features of said system can be seen.
- The sequence of figures 3A-3E show the different heights that the same swathing rake can reach, in the folded state, the axis defining the hinged joint being parallel to the ground on which the system rests (figure 3A) or with increasingly steeper inclinations (3B-3E).
- Figures 4A and 4B show two perspectives, upper and lower, respectively, of the folding and unfolding system for swathing rakes, said system comprising two swathing rakes connected to the support structure by means of two respective lifting arms, the rakes being in a horizontal unfolded position.
- Figures 4C and 4D show two views, in plan and elevation respectively, of the system shown in figures 4A and 4B, with the "V" shape of the rakes being visible in figure 4C.
- Figures 5A and 5B show, respectively, a front view and a plan view, of a folding and unfolding system for swathing rakes, with a single lifting arm, without the swathing rake being shown, where the rotation mechanism of the system can be easily seen.

List of reference numbers shown in the figures:
1.- Swathing rake;
2.- baler;
3.- displacement means;
4.- support structure;
5.- hinged articulated joint;
6.- rotation mechanism;
7.- lifting arm;
8.- suspension and levelling cylinder;
9.- hitch tow bar;
10.- swinging system;
12.- support and displacement means.

### Preferred description of the invention

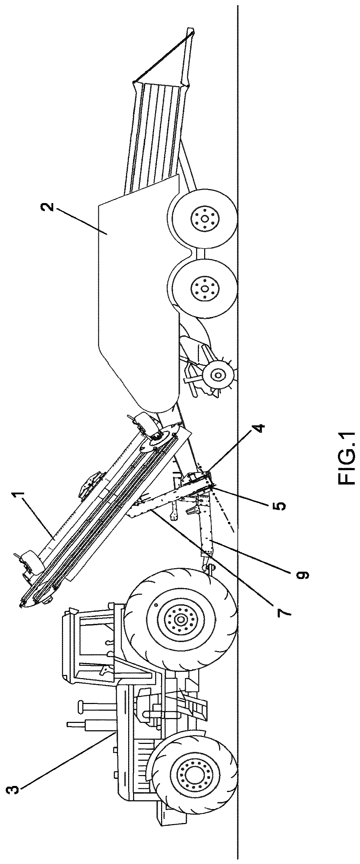

The preferred embodiment of the invention can be clearly seen in figure 1, which shows a tractor-shaped displacement means (3), towing a folding and unfolding system for swathing rakes (1), in turn connected to a baler configured to receive the stubble material raked by the swathing rake (1) and pile it into compact bundles.

The essence of the invention focusses on the manner in which the lifting arm (7), which allows the folding and unfolding of the swathing rake (1), is connected to the support structure (4) of the system.

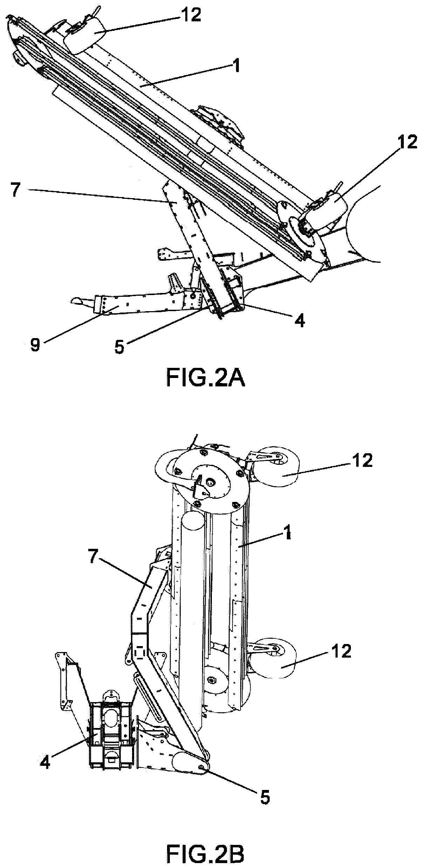

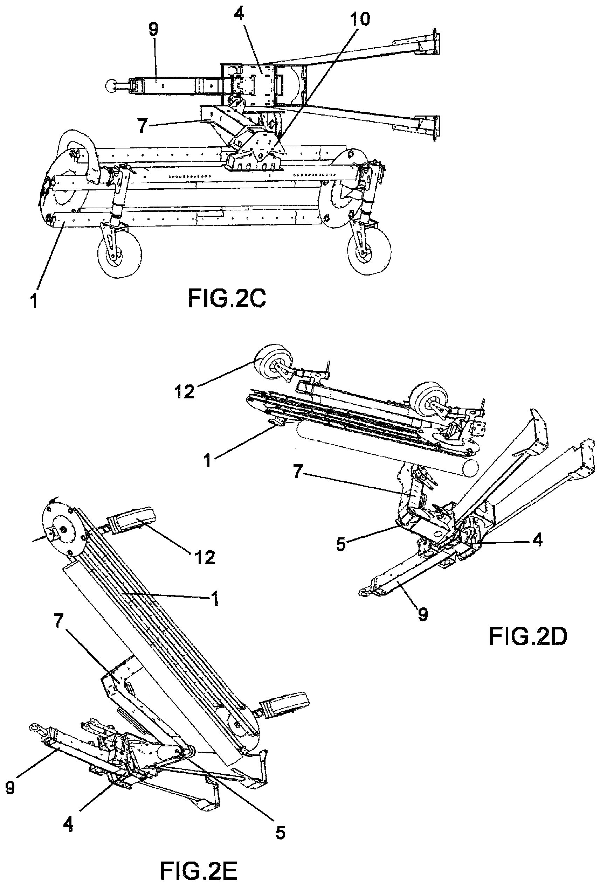

As can be seen in said figure 1, as well as in figure 2A, a first end of the lifting arm (7) is connected to a swathing rake (1), while the second end is connected, by means of a hinged articulated joint (5), to the support structure (4). Said hinged articulated joint (5) is made by means of a pivot bolt, since it has to withstand high accumulations of stress.

Unlike that which is available in the state of the art, and that which is defined in the background, the axis that defines said hinged articulated joint (5) is not located in a plane parallel to the ground on which the folding and unfolding system rests. As can be seen in figure 1, the dotted line shows that said axis is inclined with respect to the ground on which the folding and unfolding system rests.

To be more precise and to allow a better identification of how the axis that defines the invention is located, it has been specified that said axis is comprised in an intersection of an inclined plane, with respect to the flat ground on which the folding and unfolding system rests, an angle comprised between 8° and 30°, and in a plane perpendicular to said ground, the folding and unfolding system being in a suitable position and configured to be moved by a displacement means (3), such as a tractor shown in figure 1. Said axis angle is defined in said manner because the inclination of the inclined plane can be seen from a side view (figure 2A), but not from other perspectives, such as the frontal one (figure 2B).

The invention is defined from the displacement position of the folding and unfolding system, which is shown in figures 1, 2A and 3A-3E. Said position is that which, the rake(s) being in the unfolded position, they are oriented and positioned for use or operation, parallel to the ground to be raked (figures 4A-4D).

The inclination of the axis defining the hinged articulated joint (5) is independent of whether the system is located on an inclined plane or on a horizontal ground. However, it must be understood that the ground that defines the inclination of the axis must be considered flat.

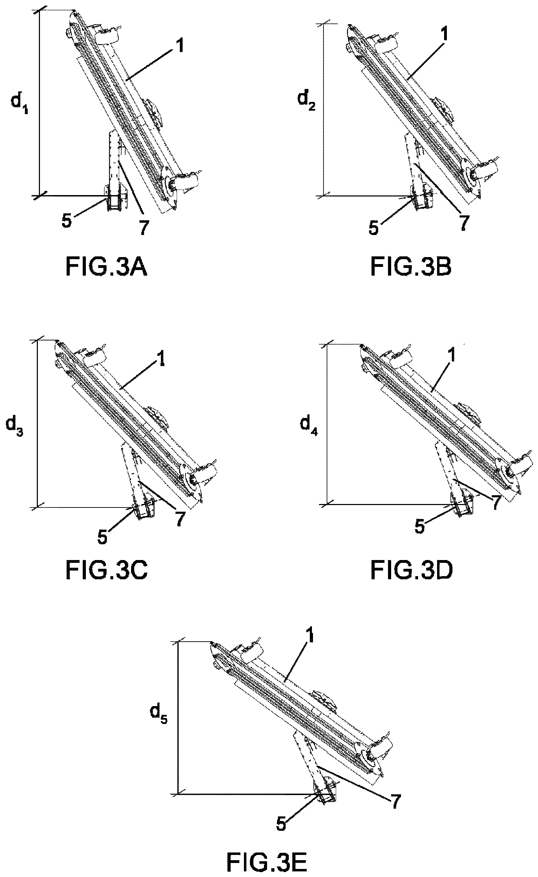

The sequence of figures 3A-3E shows how the greater the inclination of the axis that defines the hinged articulated joint (5) of the lifting arm (7) with the support structure (4), the height reached by the swathing rake (1) becomes increasingly smaller, so that, the degree of inclination is dependent on the size of the swathing rake (1).

However, said inclination must be within certain limits, since an excessive angle of inclination can cause the swathing rake (1) to collide with the transport means (3), or the generated bending load to be so high that it affects the integral state of the system, whether in the lifting arm (7), in the support structure (4) or in the joints of said elements, generating cracks and fissures that prevent its correct operation.

In order to comply with suitable parameters of use, for a variety of lengths of swathing rakes, the inclination range of the inclined plane has been limited between 8° and 30°, since angles less than 8° would hardly show any effect in reducing the height of the swathing rake (1), while angles greater than 30° could generate collisions between devices or components of the displacement means (3) and folding means, as well as the generation of excessively high bending loads to be supported by the connections of the lifting arm (7).

More specifically, the length of a swathing rake (1) must be between 8 and 11 metres long, the angle of the inclined plane that defines the orientation of the axis of rotation of the hinged articulated joint (5) being directly dependent on the length of the swathing rake (1). Thus, an 8 metre long swathing rake (1) would have an inclined plane at an angle of 10°; and an 11 metre long swathing rake (1) would have an inclined plane at an angle of 25°; the intermediate values between 8 and 11 metres being directly proportional to the indicated angles.

The folding capacity of the swathing rake (1) is determined by the user's requirements. In simpler terms, a swathing rake (1) can be folded 90°, from the extreme folded position (such as the vertical one) to the extreme unfolded position (such as the horizontal one defined by the flat ground on which the transport means rests). However, depending on the requirements, the folding capacity can cover larger angles such as up to 120°, provided that when folding the swathing rakes (1), they do not collide with each other, if there is more than one, up to 70°, in case that, when folded, they barely protrude from the span of the displacement means.

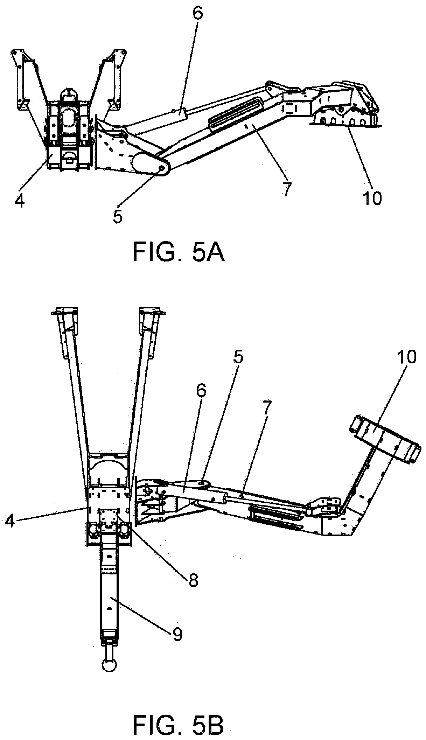

Figures 4A-4D as well as figures 5A-5B show that the system comprises a rotation mechanism (6) configured to, when activated, fold and unfold the swathing rake (1) between an extreme unfolded position and an extreme folded position, rotating the lifting arm (7), with respect to the support structure (4), through the hinged articulated joint (5). Said rotation mechanism (6) comprises a linear actuator connected at the ends to the support structure (4) and to the lifting arm (7).

Figure 5B shows how the support structure (4) can be connected to the baler (2) by means of a rigid connection, through a coupling tow bar, included in the support structure (4) itself. By means of this connection, the folding and unfolding system could be left always connected to the baler (2), in the displacement position, regardless of whether the swathing rakes (1) are in the folded or unfolded state. In fact, in a preferred embodiment, the support structure (4) is always attached to the baler (2), both elements comprising an assembly to be connected by a tractor vehicle.

Likewise, said figure 5B shows a coupling tow bar (9), which comprises the swivel articulated joint to connect the support structure (4) to the displacement means (3), which is connected by means of an articulated joint comprising at least one suspension and levelling cylinder (8).

Moreover, the first end of the lifting arm (7) is connected to the swathing rake (1) by means of a swinging system (10), which can be seen in detail in figure 5A. Said swinging system (10) consists of a free articulated joint that allows the swathing rake (1) to be positioned on the ground to be raked, adjusting the orientation of said swathing rake (1) on the ground, preventing any irregularities that the rake may encounter during the raking process from affecting the state of the system, acting as a damper.

## Claims

1. A folding and unfolding system for swathing rakes (1) attachable to a baler (2) wherein said system comprises:
- a support structure (4) configured to be connected to a baler (2) and to a displacement means (3), preferably a tractor vehicle;
- at least one lifting arm (7) comprising a first end connected to a swathing rake (1) and a second end connected, by means of a hinged articulated joint (5), to the support structure (4);
- the swathing rake (1);
- the hinged articulated joint (5)
- a rotation mechanism (6) configured to, when activated, fold and unfold the swathing rake (1) between an extreme unfolded position and an extreme folded position, the lifting arm (7) rotating, with respect to the support structure (4), through the hinged articulated joint (5);
wherein the folding and unfolding system for swathing rakes (1) is configured to be towed in a longitudinal direction, comprised in a flat ground, when pushed by the displacement means (3), in said longitudinal direction, with:
- the folding and unfolding system being oriented in a displacement position; and
- the swathing rake (1) being in any position comprised between the extreme folded position and the extreme unfolded position;
wherein the displacement position of the folding and unfolding system is that in which, the swathing rake (1) being in the extreme unfolded position, it is in the position for raking the ground over which it moves;
**characterised in that** the hinged articulated joint (5) comprises an axis of rotation which, when the folding and unfolding system is in the displacement position, is comprised in an intersection of an inclined plane, with respect to the flat ground on which the folding and unfolding system rests, an angle comprised between 8° and 30°, and a plane perpendicular to said ground;
wherein the angle of the inclined plane defining the orientation of the axis of rotation of the hinged articulated joint (5) is between 10° and 25°; and
wherein the angle of the inclined plane defining the orientation of the axis of rotation of the hinged articulated joint (5) is directly dependent on the length extension of the swathing rake (1); wherein an 8 metre long swathing rake (1) comprises a 10° angle; and wherein an 11 metre long swathing rake (1) comprises a 25° angle.

2. The folding and unfolding system, according to the preceding claim, wherein the rotation mechanism (6) comprises a linear actuator comprising a first end connected to the support structure and a second end connected to a part of the at least one lifting arm (7).

3. The folding and unfolding system, according to the preceding claim, wherein the linear actuator comprises a mechanism selected from a pneumatic cylinder, a hydraulic cylinder and a mechanical cylinder.

4. The folding and unfolding system, according to any of the preceding claims, wherein the hinged articulated joint (5) comprises a pivot bolt.

5. The folding and unfolding system, according to any of the preceding claims, wherein the support structure (4) is configured to be connected to a baler (2) by means of a rigid joint, preferably a removable joint.

6. The folding and unfolding system, according to any of the preceding claims, wherein the support structure (4) is configured to be connected to the displacement means (3) by means of a swivel joint.

7. The folding and unfolding system, according to the preceding claim, comprising a hitch tow bar (9) comprising the swivel articulated joint configured to be connected to the displacement means (3), wherein said hitch tow bar (9) is connected to the support structure (4) by means of an articulated joint comprising at least one suspension and levelling cylinder (8).

8. The folding and unfolding system, according to any of the preceding claims, wherein the lifting arm (7) is connected to the swathing rake (1) by means of a swinging system (10) configured to adjust the swathing rake (1) to the ground when the folding and unfolding system is in the displacement position and said swathing rake (1) is in the extreme unfolded use position.

9. The folding and unfolding system, according to any of the preceding claims, wherein the swathing rake (1) is configured to rotate from the extreme unfolded position to the extreme folded position an angle comprised between 70 and 120°, preferably between 80° and 110°, more preferably 90°.

10. The folding and unfolding system, according to any of the preceding claims, comprising two lifting arms (7), each of them connected, by a first end, to a corresponding swathing rake (1) and by a second end, by means of a corresponding hinged articulated joint (5), to the support structure (4).

11. The folding and unfolding system, according to any of the preceding claims, comprising support and displacement means (12) connected to the swathing rake (1) and configured to support said swathing rake (1) on the ground when it is in the unfolded state.

12. The folding and unfolding system, according to the preceding claim, comprising damping means between the support and displacement means (12) and the swathing rake (1) to which they are connected.
